# FASCICULE DE BREVET EUROPEEN

(11) **EP 0 713 556 B1**
(45) Date de publication et mention de la délivrance du brevet: **19.11.1997**
(21) Numéro de dépôt: 94920520.7
(22) Date de dépôt: 28.06.1994
(51) Int. Cl.: E04C 3/04, F16S 3/04

(54) **STRUCTURE DE MONTAGE RAPIDE A BASE DE PROFILES PREFERENTIELLEMENT EN ALUMINIUM**
SCHNELLMONTAGESYSTEM BERUHEND AUF PROFILEN, VORZUGSWEISE AUS ALUMINIUM
RAPID ASSEMBLY CONSTRUCTION BASED ON SECTIONS, PREFERABLY ALUMINIUM SECTIONS

(30) Priorité: 28.06.1993 FR 9308040
(43) Date de publication de la demande: 29.05.1996
(73) Titulaire: BOTTEMER, Xavier, F-67170 Brumath (FR)
(72) Inventeur: BOTTEMER, Xavier, F-67170 Brumath (FR); ECK, Bernard, F-67200 Strasbourg (FR)
(74) Mandataire: Littolff, Denis
(86) Numéro de dépôt international: FR9400777
(87) Numéro de publication internationale: WO9500727

(56) Documents cités:
- CH-A- 514 098
- DE-A- 1 484 138
- DE-A- 1 931 103
- DE-A- 1 960 679
- DE-U- 8 322 475
- GB-A- 782 428

## Description

La présente invention concerne un système modulaire d'édification rapide de structures, basé sur des poutrelles profilées et des pièces de liaison permettant l'assemblage desdites poutrelles entre elles.

Ce système comprend également un jeu d'accessoires réalisant le raccordement avec des éléments qui ne font pas partie de la structure proprement dite, et qui représentent une possibilité d'application.

Ainsi, une application préférentielle mais non exclusive de l'invention consiste en la construction d'édifices, en combinant la structure de l'invention avec des panneaux de façade, de toiture, plaque de béton, etc .... Dans ce cadre, les accessoires permettent avantageusement d'effectuer le raccordement entre ces panneaux, connus en soi, et les profilés de la structure.

L'armature de tels édifices est formée par des poutrelles profilées, de préférence en aluminium, que l'on monte et démonte avec une grande rapidité et qui peuvent coopérer avec un grand nombre d'éléments accessoires, qui dépendent des fonctionnalités à remplir.

Bien entendu, on connaît déjà de nombreuses formes de poutrelles profilées utilisées dans des applications diverses. En particulier, de tels profilés existent avec des dimensionnements beaucoup plus réduits et servent à l'édification de structures d'huisserie métallique, pour la réalisation de cadres de panneaux, portes, fenêtres, volets et/ou équivalents.

Le modèle d'utilité allemand DE-U- 83 22 475 divulgue par exemple un procédé de construction basé sur l'utilisation de poutrelles profilées que l'on peut combiner avec des accessoires destinés en particulier à solidariser lesdites poutrelles les unes aux autres.

Le moyen de fixer perpendiculairement deux poutrelles est le suivant : un orifice central longitudinal est prévu dans chaque poutrelle profilée, dont au moins les extrémités sont filetées - lesdits filetages servent à fixer des vis de solidarisation dont la tête est noyée dans une glissière latérale de l'autre poutrelle.

Pour pouvoir exercer le couple de vissage via un outil extérieur, il faut que ladite tête de vis soit en regard d'un orifice accessible de l'extérieur. C'est pourquoi, on a prévu des orifices forés à cet effet dans la paroi de l'orifice central longitudinal, perpendiculairement et traversant de part en part. Ces orifices sont placés à des endroits particuliers, prévus à l'avance et en nombre nécessairement limités, préférentiellement aux extrémités de chaque poutrelle.

On ne peut donc pas fixer une poutrelle perpendiculairement à une autre à n'importe quel endroit le long de cette dernière, et la souplesse d'utilisation de ce système s'en trouve sérieusement diminuée. Le texte de ce modèle d'utilité n'enseigne pas comment pallier cet inconvénient, qui peut être considéré comme majeur pour un tel système, dont la vocation est ainsi nécessairement limitée à des cadres de bâti, comme cela est d'ailleurs déclaré dans le texte.

Le brevet britannique GB-A- 782 428 concerne également des systèmes de construction d'éléments basés sur des profilés métalliques connectables via des éléments de liaisons notamment insérés dans des glissières desdits profilés. L'une des caractéristiques majeures des éléments de fixation noyés dans les glissières réside dans leur forme particulière, permettant leur insertion dans les glissières, leur coulissement vers la position destinée, puis leur blocage en ladite position.

A cet effet, les éléments de fixation présentent une largeur qui n'excède pas la largeur de la lumière longitudinale de la glissière du profilé, une longueur qui peut être légèrement supérieure à la largeur de la glissière, et au moins un coin tronqué. Ce dernier permet le blocage longitudinal de l'élément de fixation par rotation dans la glissière. Les éléments de fixation sont pourvus de filetages dans lesquels des tiges filetées notamment de vis peuvent être boulonnées, permettant de fixer des accessoires externes tels que des équerres de solidarisation à d'autres profilés.

Le brevet britannique enseigne principalement l'utilisation de ces éléments de fixation coulissables et blocables, appliqués à des profilés très simples à section en V élargi à base plane. Un moyen de blocage supplémentaire également divulgué consiste en une bague souple solidarisée à la partie de l'élément de fixation faisant face à la base de la glissière.

Ce document ne divulgue cependant pas de moyens de procéder à la fixation de poutrelles dont les éléments de fixation sont invisibles de l'extérieur : les liaisons utilisées sont à boulonnage, avec les têtes de vis apparaissant hors des glissières.

Tel n'est pas le cas des liaisons enseignées par le document de brevet helvétique CH-A- 514 098, qui permettent la solidarisation perpendiculaire de deux poutrelles profilées à n'importe quel emplacement le long d'une des faces de l'une desdites poutrelles, mais pour un système de construction léger, convenant par exemple pour des étagères.

Le moyen utilisé consiste en un corps tubulaire doté d'une tête noyée dans la glissière d'une des poutrelles alors que ledit corps est inséré dans l'alésage central de l'autre. Ladite tête présente une surface plane s'appuyant contre les surfaces internes contiguës à la fente longitudinale de la glissière. Le serrage est latéral, s'opérant perpendiculairement à l'aide d'une tige filetée qui peut s'insérer dans un creux conique du corps tubulaire. Au fur et à mesure du serrage, un centrage de ladite tige filetée a lieu dans ledit évidement conique, ramenant la tête vers la poutrelle dont est issu le corps tubulaire et la plaquant contre lesdites surfaces internes. Au desserrage, un ressort comprimé exerce une pression tendant à expulser le corps tubulaire hors de l'orifice d'extrémité longitudinal de la poutrelle.

Cette solution n'envisage aucun moyen de blocage, lorsque deux poutrelles sont solidarisées perpendiculairement. Le moyen de serrage ne permet pas d'envisager que les structures ainsi construites soient utilisées pour autre chose que pour des charges légères. Un tel système est donc approprié pour le petit mobilier, mais pas pour construire des édifices de type abri ou maison provisoire.

La construction de stands, par exemple pour des expositions, est possible avec le système décrit dans le brevet allemand DE-A- 1 960 679. Toutefois, l'inconvénient majeur du système précédent peut également être mentionné dans ce dernier dispositif.

Le blocage par frottement et serrage d'une tête plane à l'intérieur d'une glissière, à l'instar du système précédent, ne permet pas le port de charges conséquentes. La différence réside ici dans le moyen de verrouillage, utilisant un corps non tubulaire pour l'élément de fixation, mais un corps d'aspect prismatique, que l'on verrouille dans la zone centrale également d'allure sensiblement prismatique de la poutrelle par rotation d'un quart de tour.

Ledit corps pénètre librement dans ladite zone centrale dans une position de la poutrelle et se bloque dans une position située à 45° de la première, rendant les deux surfaces externes des poutrelles coplanaires. Le corps prismatique de l'élément de fixation est entouré d'un manchon en matériau synthétique souple permettant audit élément d'effectuer sa rotation jusqu'à l'enclipsage final.

Au total, l'enseignement de l'art antérieur ne fait jamais apparaître de structure permettant la fixation notamment perpendiculaire et à n'importe quel endroit de deux poutrelles selon une technique suffisamment solide pour toute utilisation, allant jusqu'à la construction de maisons provisoires dont les profilés constituent alors l'ossature, et avec des éléments de connexion et de fixation qui ne soient pas apparents de l'extérieur.

Les structures divulguées ne permettent pas d'édifier des constructions de grande taille sans qu'il soit possible de ne pas les démonter de l'extérieur, c'est à dire avec des éléments de fixation invisibles, et les documents de l'art antérieur présentés ne décrivent pas de gamme d'accessoires complète dans le but de construire un édifice d'habitation. Cette possibilité constitue pourtant un objectif majeur de la structure de la présente invention.

Aucun des systèmes précédents ne comporte en outre la combinaison entre des éléments de fixation noyés dans la glissière d'une poutrelle et un second élément fixé dans l'alésage central de l'autre poutrelle, en vue de leur solidarisation.

Le document qui peut être considéré comme étant le plus proche est le brevet helvétique précité, CH-A- 514 098, qui comporte, ainsi que discuté, une différence technique fondamentale, aboutissant notamment à un résultat plus restreint.

Cette différence réside dans le fait que l'élément de liaison permettant la fixation perpendiculaire de deux poutres est en une seule pièce, tributaire d'un système de blocage dont l'amplitude et l'efficacité sont limitées. Les deux parties de cette unique pièce situées respectivement dans les deux poutrelles à relier sont donc mobiles l'une part rapport à l'autre pour réaliser deux positions distinctes, à savoir le blocage et la libération des poutrelles. Le système mécanique utilisé, à base d'un excentrique, ne permet pas d'exercer une pression suffisante sur les faces internes de la glissière d'une des poutrelles, de sorte que la liaison mécanique ne peut recevoir de fortes charges pondérales.

En outre, cette unique élément de liaison ne permet que de fixer deux poutrelles l'une à l'autre, ou à la limite deux éléments s'adaptant à la forme de cet élément particulier, ce qui n'est cependant pas décrit.

L'invention propose un système de liaison dans lequel la pièce insérée axialement dans la partie centrale d'une poutrelle coopère avec une autre pièce pour former la liaison, laquelle supporte des charges élevées, cette seconde pièce permettant au surplus de fixer d'autres éléments qui font partie du système modulaire de l'invention.

Ce dernier ne concerne en effet pas uniquement un moyen de relier perpendiculairement deux poutrelles, mais tout un système modulaire d'édification rapide de structures, d'où une problématique différente : il s'agit de trouver un système de liaison capable de gérer la fixation perpendiculaire de deux poutrelles, aux conditions mentionnées plus haut, ainsi que la fixation d'autres accessoires.

Le système selon l'invention est basé sur des poutrelles profilées et des pièces de liaison permettant l'assemblage desdites poutrelles entre elles et avec un jeu d'accessoires réalisant le raccordement avec des éléments extérieurs complétant la structure, tels que des panneaux verticaux et/ou des éléments de toiture. Ledit système se compose :
- de poutrelles profilées de section rectangulaire dotées d'au moins une glissière latérale axiale sur au moins un des côtés, et présentant une partie centrale apte à circonscrire un élément axial cylindrique,
- de pièces de liaison noyées dans lesdites glissières et coulissables,
- d'au moins une pièce d'allure cylindrique pour assembler perpendiculairement les poutrelles profilées, ladite pièce d'allure cylindrique étant destinée à être fixée à l'une des poutrelles par solidarisation à une pièce de liaison noyée dans la glissière de ladite poutrelle et fixée à l'autre poutrelle par goupillage,
- d'accessoires de raccordement fixables aux pièces de liaison coulissables, en vue de solidariser des éléments extérieurs à la structure,
- de pièces destinées à fixer l'orientation relative des poutrelles, également fixables auxdites pièces de liaison coulissables et,
- d'éléments de renfort et/ou d'habillage des structures.

Il est caractérisé en ce que pour assembler perpendiculairement les poutrelles profilées, un alésage est aménagé axialement dans la pièce d'allure cylindrique, afin que ladite pièce d'allure cylindrique soit fixable à ladite pièce de liaison au moyen d'une vis passant dans ledit alésage axial.

Une structure préférentielle comporte deux plans de symétrie axiaux médians. Les poutrelles profilées qui obéissent à ces plans de symétrie sont par conséquent munies de quatre glissières, une par côté pour une poutrelle à section carrée. Selon une variante possible, ladite section est rectangulaire et, sur sa longueur, elle comporte deux glissières homologues parallèles.

On peut construire des structures avec des montants et des traverses constitués d'une seule de ces poutrelles profilées. Cependant, à des fins de renforcement de la structure, ou pour moduler une structure existante en l'étendant par ajout d'autres structures annexes, il est possible de grouper plusieurs poutrelles ensemble.

Selon un mode de groupement possible, elles peuvent être assemblées parallèlement au moyen de deux pièces de liaison noyées dans des glissières en regard et fixées l'une à l'autre.

Un assemblage du type montant/traverse introduit nécessairement un angle entre les axes des poutrelles. Plusieurs modes de liaison sont possibles, selon que l'on a affaire à des poutrelles isolées ou à des groupements, ou que le système de liaison est visible ou caché. Dans ce dernier cas, le fait que ce système soit caché implique qu'il est plus difficilement démontable.

Les poutrelles, au même titre que les accessoires, doivent avoir une liberté de déplacement l'une par rapport à l'autre afin de faciliter le montage et le démontage.

C'est pourquoi, les pièces de liaison noyées dans les glissières sont solidarisées aux accessoires de raccordement et aux pièces fixant l'orientation relative des poutrelles profilées par des vis pointeaux s'appuyant contre le fond des glissières.

Il suffit de desserrer ladite vis pour permettre le déplacement d'un des éléments par rapport à l'autre. Il y a également une vis pointeau dans l'alésage de la pièce de liaison d'allure cylindrique, aux mêmes fins.

Il est important que l'on puisse effectuer des réglages, rajouter ou supprimer des pièces même lorsque la structure de base est déjà installée. Il faut par conséquent que les pièces de liaison noyées dans les glissières puissent être manipulées sans passer par l'une des extrémités de la poutrelle qui la contient.

A cet effet, elles ont préférentiellement une forme de parallélogramme dont la hauteur est inférieure à la largeur de l'ouverture axiale de la glissière, et dont la longueur correspond à la largeur intérieure de ladite glissière.

Lors de leur introduction, on ne peut leur faire effectuer une rotation que dans un sens, afin que leurs petits côtés se positionnent parallèlement et au contact des bords latéraux internes de la glissière. Le mouvement rotatif inverse es requis pour les retirer.

Bien entendu, d'autres formes plus classiques sont possibles pour cette pièce de liaison, par exemple rectangulaire, mais il n'est alors pas possible de l'introduire ou la retirer ailleurs que par les extrémités de la poutrelle profilée.

La version rectangulaire peut comporter un taraudage d'axe sensiblement longitudinal, dans lequel il est possible de visser une platine reliée ou non à un accessoire extérieur à la structure.

Un autre taraudage, parallèle au trou central de guidage des vis pointeaux, sert également à effectuer un serrage de prépositionnement à l'aide d'une vis noyée dans ce taraudage.

Le prépositionnement est de préférence effectué avant le transport des éléments du système sur le site, et permet un montage encore plus rapide de ceux-ci.

Un guidage longitudinal supplémentaire provient d'un bossage supplémentaire pratiqué sur la face de cette pièce de liaison en regard de la fente de la glissière et de même largeur que celle-ci.

Ces pièces sont généralement placées entre les poutrelles et les accessoires fonctionnels. Lorsque l'objectif d'une telle structure réside plus particulièrement dans la construction d'édifices, le jeu de ces accessoires comprend principalement :
- des tôles de raccordement entre des éléments de toiture et de façade,
- des profilés d'assises supportant des panneaux verticaux,
- des profilés de support de gouttière,
- des profilés de fixation de la partie supérieure des panneaux verticaux.

Ces accessoires permettent le raccordement aux éléments extérieurs à la structure, du type panneaux verticaux et/ou éléments de toiture.

Ces panneaux verticaux comportant bien entendu des chants horizontaux et verticaux. Certains profilés sont adaptables exclusivement aux chants horizontaux, alors que d'autres peuvent également s'appliquer aux chants verticaux.

Selon des caractéristiques générales notamment destinées à les adapter à des éléments tels que des panneaux de façade et/ou de toiture connus en soi, ces tôles et profilés ont les particularités suivantes :
- les profilés d'assise des panneaux de façade verticaux peuvent comporter un rail sur lequel le panneau vient reposer par gravitation,
- les profilés de fixation des parties supérieures des panneaux de façade verticaux ont une section de type unciforme, dont l'extrémité vient s'accrocher dans lesdits panneaux, lorsqu'on les déplace dans la direction du panneau dans leurs glissières en desserrant les pièces de liaison noyées.

Ces formes sont particulièrement avantageuses parce qu'elles utilisent le poids des panneaux, et permettent une fixation sûre sur les structures d'une manière très simple pour les opérateurs.

Les autres accessoires possibles dépendent bien entendu de la configuration des éléments extérieurs à adapter à la structure que l'on construit. Ainsi, d'une façon connue en soi, il y a deux types de tôles profilées pour le raccordement des panneaux de toiture ou plus généralement de structures de toitures au système de l'invention. Selon une première configuration, le toit peut dépasser au-delà du plan vertical de la façade, induisant une configuration particulière de la tôle. Une variante plus simple consiste à maintenir l'extrémité de cette toiture dans le plan vertical extérieur de ladite façade ou dans un plan très voisin.

Dans les deux cas, on peut installer des profilés qui ont pour fonction de soutenir une gouttière, avec une forme appropriée connue en soi.

On a évoqué ci-dessus le problème du raccordement non parallèle entre deux poutrelles, sans entrer dans les détails lorsqu'il n'y a pas de groupement de plusieurs poutrelles dans un espace restreint. Selon une solution simple, ces raccordements se font par des cornières auxquelles ou donne l'angle voulu. Une variante améliorée consiste à introduire une charnière entre les deux ailes de la cornière, de sorte qu'au montage, on donne la direction désirée à la traverse.

Il y a plusieurs déclinaisons possibles de tous les éléments de la structure. Ainsi, en tant qu'élément de renfort, on peut utiliser un profilé simple, de section non rectangulaire, avec une unique glissière.

Par ailleurs, il est bien entendu que les poutrelles à section carrée ou rectangulaire peuvent ne comporter qu'une ou deux glissières sur les quatre faces.

L'un des avantages majeurs de l'invention réside dans l'utilisation d'un seul calibre de vis, avec deux types de boulonnage uniquement. La conséquence est qu'il suffit de deux clés appropriées pour effectuer tout le montage. Selon l'emplacement de la liaison boulonnée, accessible ou non, il peut s'agir d'une clé à six pans et d'une clé classique pour tête fraisée, bien que d'autres configurations soient également possibles.

Dans le cas de l'édification rapide de bâtiments à l'aide de la structure de l'invention, exemple préférentiel choisi en l'espèce, les configurations des poutrelles et des accessoires de l'invention permettent d'insérer des joints d'étanchéité aux endroits appropriés.

Le système de l'invention, par la configuration judicieuse des éléments qui le composent, permet de monter et démonter très rapidement toutes sortes de structures, et d'y adapter des éléments additionnels selon de multiples variantes comme on l'a vu précédemment.

On peut très facilement agrandir une ossature déjà constituée, la diminuer, et plus généralement l'adapter en un temps très réduit à tous les besoins.

Les habillages de la structure consistent par exemple en des tôles d'angles, connues en soi, qui ferment l'ossature à l'extérieur et/ou à l'intérieur, et contribuent également à l'étanchéité. Selon un résultat secondaire, ces tôles d'habillage ont une fonction esthétique qui n'est pas dénuée d'importance.

Ces tôles d'angle sont fixées à l'ossature de la manière suivante, lorsqu'elles sont extérieures :

Elles sont reliées à une pièce d'angle en forme de croix qui coopère d'une part avec une poutrelle d'angle et d'autre part avec des panneaux d'angle. Ces pièces peuvent comporter un taraudage de prépositionnement, à l'instar des pièces de liaison noyées rectangulaires.

Deux branches consécutives de la croix coopèrent avec les bordures de deux glissières de deux côtés sécants de la poutrelle, et avec les bords desdits panneaux au moyen des deux autres branches.

Sur cette pièce en croix, entre les branches placées au contact des bords des panneaux d'angle, se trouve une tige de liaison avec ladite tôle d'angle extérieure, dont les deux ailes latérales sont plaquées contre les panneaux.

D'autres applications possibles de l'invention sont les suivantes :
- Bâtis de machines,
- Structures de tunnels,
- Galeries de voitures,
- Porte-luminaires,
- Ossature de bâtiments industriels,
- Armatures de verrières,
- Charpentes de toitures.

Le matériau préférentiellement choisi pour construire la majeure partie des éléments, et en particulier ies poutreiies profilées, est l'aluminium, dont la légèreté et la solidité sont un atout supplémentaire. Le métal peut être revêtu d'une couche de peinture empêchant l'oxydation naturelle.

Ces structures peuvent être mises sous l'eau sans induire de grippages, ou encore être remplies d'eau froide ou chaude, voire de vapeur, sans altérer les dimensions des profilés. Elles peuvent ainsi contribuer dans certains cas à la sécurité anti-incendie.

Dans la suite, on va décrire plus en détail les divers composants du système de l'invention et leurs interactions possibles, en se référant aux figures placées en annexe, pour lesquelles :
- La figure 1 montre un assemblage perpendiculaire de deux poutrelles profilées, la liaison interne selon l'invention étant renforcée par une cornière externe,
- La figure 2 représente une poutrelle double,
- La figure 3 montre une pièce de liaison,
- La figure 4 montre une variante de cette dernière,
- La figure 5 illustre une cornière rigide,
- La figure 6 montre une cornière avec charnière,
- La figure 7 est une section d'un profilé d'assise pour panneaux verticaux,
- La figure 8 est une section d'une pièce en croix, d'assemblage pour les angles,
- La figure 9 montre une section d'une pièce de fixation supérieure de panneaux verticaux,
- La figure 10 est un profilé support de gouttière,
- La figure 11 est un élément renfort simple,
- La figure 12 est une tôle d'angle,
- La figure 13 est un profilé de raccord à toiture,
- La figure 14 montre une pièce cylindrique en coupe,
- La figure 15 est une tôle ou profilé porteur de panneaux de façade,
- La figure 16 est une vue en section d'un groupement parallèle de deux profilés.

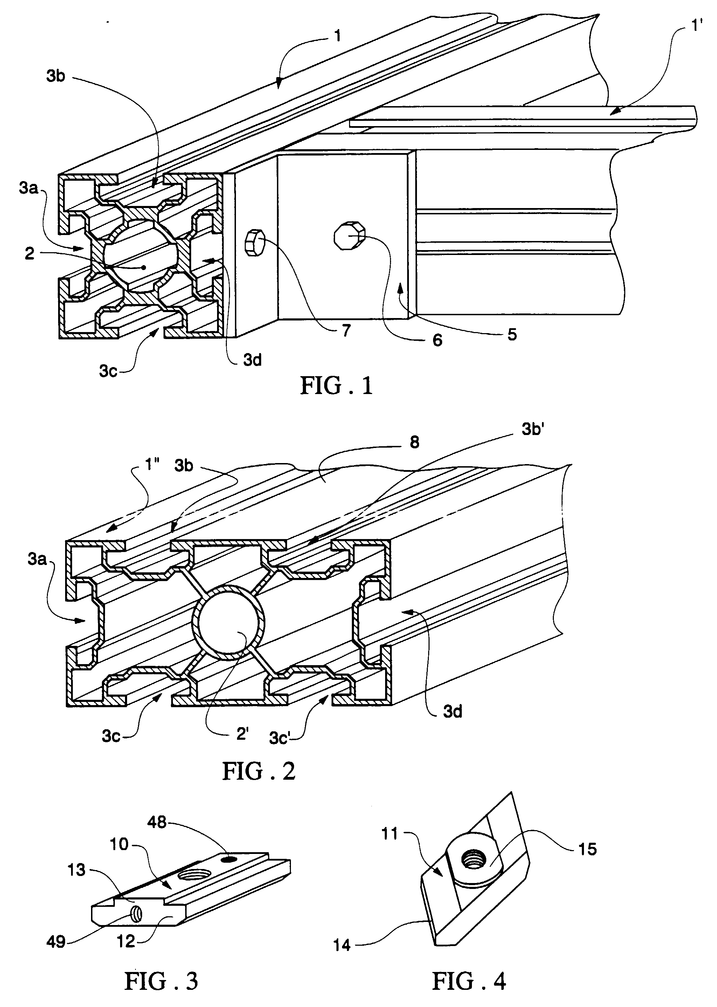

La figure 1 illustre particulièrement bien certains aspects de l'invention. En premier lieu, on y voit la section d'une poutrelle profilée (1), avec la partie centrale (2) prévue pour recevoir un corps d'allure cylindrique et quatre glissières (3a ; 3b ; 3c ; 3d).

Cette configuration particulière obéit aux deux plans de symétrie mentionnés plus haut, et présente une section carrée.

Cette première poutrelle est fixée à une poutrelle (1') par une pièce d'allure cylindrique selon l'invention (qui n'est pas apparente), cette première liaison étant renforcée par une cornière (5) en équerre, les deux poutrelles étant solidarisées perpendiculairement l'une à l'autre.

Les deux têtes (6) et (7) des vis pointeaux apparaissant sur les deux ailes correspondantes de la cornière (5) sont strictement identiques, ainsi que les pièces de liaison noyées dans les glissières (3) qui n'apparaissent cependant pas sur ce dessin.

La figure 2 montre une configuration de poutrelle profilée (1") double dont deux côtés opposés (8 ; 9) comprennent chacun deux glissières (3b, 3b' ; 3c, 3c'). Cette structure double obéit également aux deux plans de symétrie mentionnés et comporte par conséquent des nervures intérieures reliant la partie centrale cylindrique (2') aux glissières périphériques (3).

Les figures 3 et 4 représentent deux variantes de pièces ( 10, 11) de liaison destinées à être noyées dans des glissières (3). Selon une première possibilité, ladite pièce (10) est rectangulaire, pourvue d'une embase (12) épousant la forme intérieure de la glissière, surmontée d'un bossage (13) de largeur lui permettant de s'insérer dans la rainure axiale de la glissière.

Comme on l'a dit, cette solution présente l'inconvénient de ne pouvoir être mise ou enlevée de la glissière dont elle dépend que par une des extrémités du profilé, ce qui peut s'avérer gênant lorsqu'on veut modifier une structure existante.

La seconde configuration est constituée d'une embase (14) ayant la forme d'un parallélogramme surmonté d'une rondelle (15) dotée de deux méplats latéraux lui permettant de repérer la position de fonctionnement de la pièce (11) et d'améliorer le guidage axial dans la fente de la glissière.

Ces deux pièces sont percées afin de laisser le passage à la vis pointeau qui les traverse.

La pièce rectangulaire peut au surplus comporter deux alésages supplémentaires taraudés, l'un (49) d'allure longitudinale, le second (48) étant d'axe parallèle au taraudage prévu pour recevoir la vis pointeau.

Ce dernier est prévu pour réaliser un prépositionnement des pièces de liaison (10, 11) noyées dans leurs glissières (3), avant l'installation sur site. Celles-ci sont placées à distance régulière les unes des autres, distance qui est fonction de la structure à bâtir.

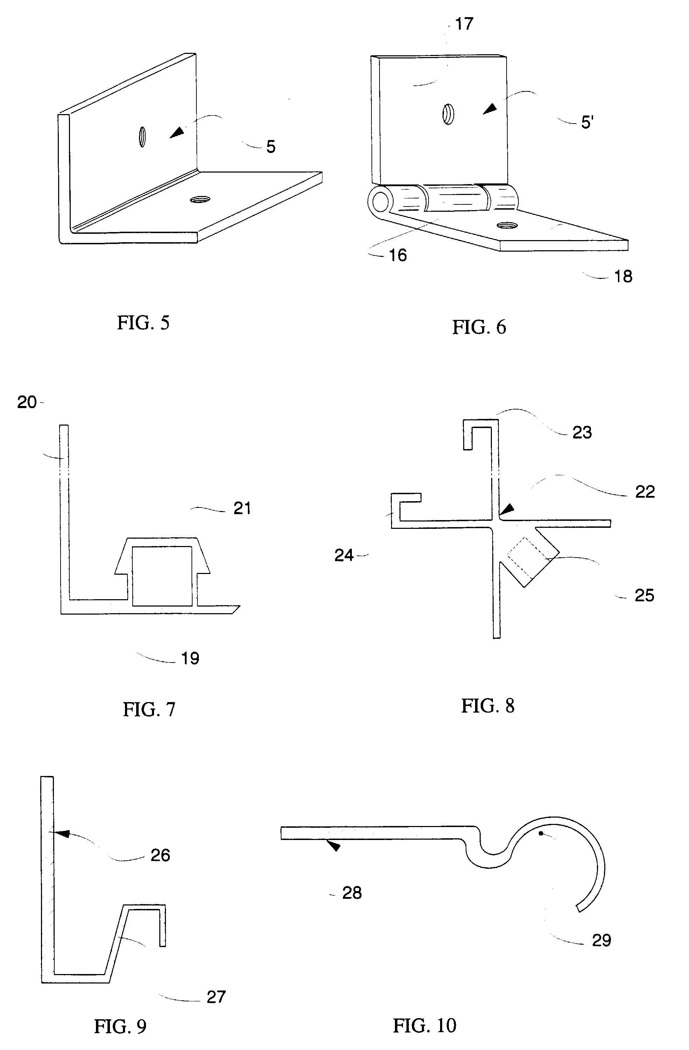

La figure 5 montre une cornière en équerre (5) rigide, avec ses percements aux mêmes fins que ci-dessus. En figure 6, la pièce (5') est quasi-identique, mais présente une charnière (16) donnant un écart angulaire variable entre les deux ailes (17) et (18). Au cours de la construction de l'ossature d'un dispositif quelconque avec le système de l'invention, on peut positionner angulairement les deux poutrelles concernées par le montage en fonction des contraintes imposées par la fixation de l'autre extrémité de la poutrelle mobile en rotation.

La figure 7 est une section d'un profilé recevant un panneau de façade horizontal (non représenté ici). Ce profilé comporte également deux ailes (19, 20), dont celle qui est horizontale, et par conséquent destinée à supporter le poids du panneau, est munie d'un rail (21). Selon un exemple particulier, ce rail a une section en queue d'aronde, qui peut être prévue pour mieux accrocher la partie basse du panneau. Ce rail a une fonction de guidage du panneau, empêchant une dérive transversale de celui-ci. Il ne s'applique qu'aux chants horizontaux desdits panneaux.

La figure 8 représente une section d'un élément d'assemblage (21, 22) placé à des angles de structures, lorsque deux panneaux sont à proximité l'un de l'autre et positionnés perpendiculairement l'un à l'autre. Cet élément concerne par conséquent les poutrelles d'angle, où se rejoignent les extrémités de panneaux verticaux fixés à cet angle via deux branches dudit élément. Cette pièce en croix comporte deux extrémités d'allure unciforme (23, 24) destinées à coopérer avec les bordures latérales des fentes de deux glissières (3) placées sur deux côtés perpendiculaires consécutifs d'une poutrelle, dans lesquelles elles s'accrochent.

Au niveau du croisement, un bossage sensiblement prismatique (25) placé approximativement sur la médiatrice de l'angle formé par les deux branches restantes de la pièce en forme de croix peut, selon une possibilité, comporter une tige filetée prévue pour coopérer avec une pièce d'angle extérieure comme on va en décrire dans la suite, ainsi qu'une vis pointeau de positionnement.

La figure 9 montre une section d'un profilé (26) de fixation de la partie supérieure d'un panneau de façade. Cette pièce est intéressante car elle montre que les ossatures créées avec les structures selon l'invention sont habillées avec des panneaux munis de bords de type mâle à une extrémité et de type femelle à l'extrémité opposée. Elle ne s'applique également qu'aux chants horizontaux des panneaux.

Ces panneaux, connus en soi, ont par exemple un revêtement en PVC, recouvrant une âme en mousse synthétique, ou tout autre matériau adéquat.

Le profilé de la figure 9, en combinaison avec celui de la figure 7 pour la partie basse du panneau, maintient ce dernier en permettant une rupture du pont thermique.

Les parois peuvent être dotées de joints de type mousse, simple ou double face.

La partie supérieure (27) du profilé (26) prend appui sur l'une des bordures longitudinales de la partie supérieure du panneau.

En figure 10, l'accessoire présenté est un support de gouttière (28) dont la partie galbée (29) est précisément prévue à cet effet.

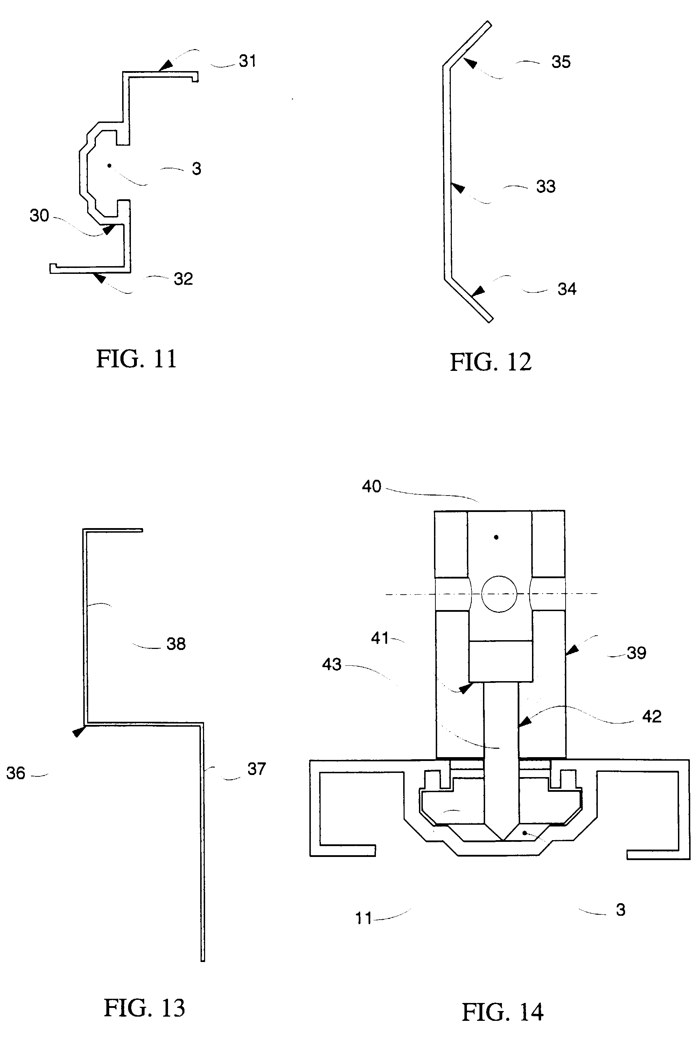

La figure 11 présente une pièce de renfort (30) munie d'une unique glissière (3). Selon une variante possible, cette pièce peut être configurée en U, c'est à dire avec les deux ailes externes (31, 32) orientées dans le même sens.

La figure 12 concerne une pièce de liaison angulaire extérieure (33) qui fait par conséquent la liaison entre deux bords extrêmes de panneaux qui se rejoignent perpendiculairement. C'est pourquoi les deux ailes (34, 35) latérales de cette pièce ont une orientation perpendiculaire l'une à l'autre. Ces ailes sont plaquées contre lesdits panneaux, préférentiellement avec un complément d'étanchéité.

Selon une configuration plus générale. l'angle formé par ces ailes (34, 35) est quelconque, de préférence supérieur à 90°, et la pièce (33) peut par conséquent relier des cloisons dont les orientations correspondent à celles de ces ailes (34, 35).

La figure 13 concerne un profilé (36) de raccordement avec un élément de toiture. Sa partie inférieure (37) est reliée à la façade verticale de la structure, alors que le décrochement supérieur (38) reçoit la toiture avec un complément d'étanchéité. En l'occurrence, ladite toiture déborde de la façade.

Selon une variante (non représentée), il n'y a pas de décrochement (38), car le toit ne déborde pas de la façade.

L'élément (39) en coupe vu à la figure 14 est d'allure cylindrique et peut se glisser dans les parties centrales (2) des profilés (1, 1', 1"). Son fonctionnement est particulièrement explicite sur cette figure : il est doté d'un alésage (40) axial avec un épaulement (41), introduisant un percement (42) plus réduit de guidage de la vis pointeau (43).

La tige de cette vis pénètre dans la fente de la glissière (3) et se visse dans une pièce de liaison (10 ou 11) libre en translation, mais immobilisée en rotation. Il y a boulonnage et serrage, lorsque la pointe de la vis vient en butée contre le fond de la glissière (3). Bien entendu, le boulonnage ne peut être effectué dans ce cas qu'avec une clé à six pans.

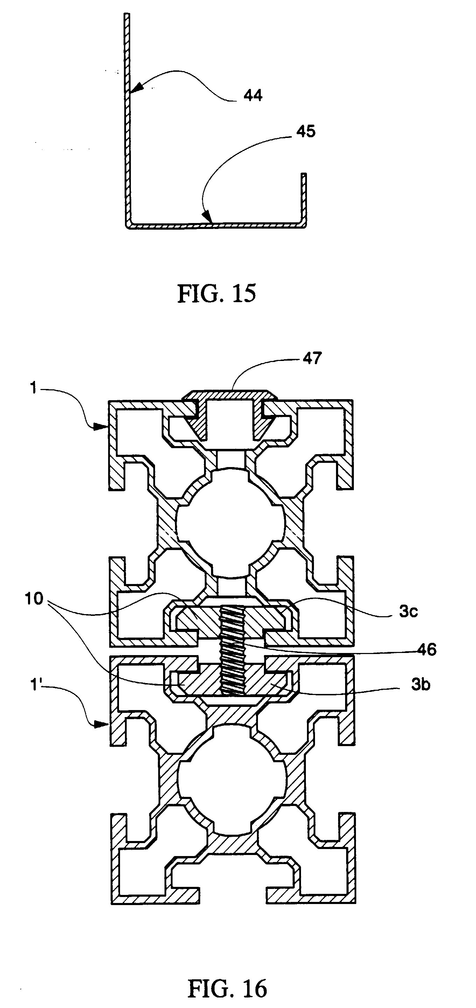

L'élément (44) représenté en figure 15 est une variante de celui qui apparaît en figure 7. Dans un certain nombre de cas, il suffit en effet de positionner le panneau de façade dans la gorge (45), son poids l'y maintenant sans artifice supplémentaire.

La figure 16 représente un couplage parallèle de deux poutrelles profilées (1, 1') au moyen de deux pièces de liaison (10) noyées dans leurs glissières respectives (3b, 3c) et fixées entre elles par une tige filetée (46) dotée d'un percement à six pans.

Selon une possibilité d'habillage, la poutrelle comprend un profilé d'obsturation (47) de la glissière (3), qui peut être plus ou moins complexe, et servir à rattacher des éléments additionnels à la poutrelle (1, 1', 1").

Lorsqu'on dispose de tous les éléments tels que décrits auparavant, il est aisé de comprendre le fonctionnement de l'ensemble.

Les montants sont scellés au sol par des platines (non représentées) et reliés entre eux par des traverses horizontales ou inclinées. Ces éléments sont des poutrelles classiques (1, 1', 1") ou des groupements de poutrelles, s'il y a des agglomérations de structures ou des extensions.

Ils définissent le dimensionnement de l'ossature et sont prêts à être habillés.

Les accessoires sont fixés, toujours mobiles suivant un unique degré de liberté grâce aux pièces de liaison noyées dans les glissières, aux emplacements voulus. Les réglages de positionnement sont donc particulièrement faciles à effectuer.

Les profilés de support des panneaux ou des éléments de toiture courent entre deux montants définissant une paroi, ainsi que les profilés les fixant à l'extrémité supérieure et/ou opposée desdits panneaux ou éléments.

Au niveau des angles, on place les pièces angulaires intérieure et extérieure ainsi qu'on les a décrites, fixées l'une à l'autre par une tige filetée.

Les éléments de toiture sont retenus et positionnés par les profilés de raccordement décrits ci-dessus, qui courent aussi le long des parois.

La plupart du temps, ces accessoires profilés sont horizontaux.

Chaque emplacement de fixation d'une pièce à l'autre est réglable, et cela confère au système de l'invention une grande souplesse.

On peut assembler un abri, ou une construction plus sophistiquée, en un temps très bref. Cela peut constituer un élément de réponse au problème des sans abris, ou un moyen de reloger des habitants d'une région sinistrée après un cataclysme.

Mais, comme on l'a dit, ce système ne s'applique pas uniquement à la construction d'édifices, mais convient pour de nombreuses autres applications.

## Revendications

1. Système modulaire d'édification rapide de structures, basé sur des poutrelles profilées (1, 1', 1") et des pièces de liaison (5 ; 10 ; 11) permettant l'assemblage desdites poutrelles (1, 1', 1") entre elles et avec un jeu d'accessoires réalisant le raccordement avec des éléments extérieurs complétant la structure, tels que des panneaux verticaux et/ou des éléments de toiture, ledit système se composant :
- de poutrelles profilées (1, 1', 1") de section rectangulaire dotées d'au moins une glissière (3a, 3b, 3c, 3d) latérale axiale sur au moins un des côtés, et présentant une partie centrale (2) apte à circonscrire un élément axial cylindrique,
- de pièces de liaison (10, 11) noyées dans lesdites glissières et coulissables,
- d'au moins une pièce d'allure cylindrique (39) pour assembler perpendiculairement les poutrelles profilées, ladite pièce d'allure cylindrique (39) étant destinée à être fixée à l'une des poutrelles (1, 1', 1) par solidarisation à une pièce de liaison (10, 11) noyée dans la glissière de ladite poutrelle et fixée à l'autre poutrelle par goupillage,
- d'accessoires de raccordement (26, 36, 44) fixables aux pièces de liaison coulissables, en vue de solidariser des éléments extérieurs à la structure,
- de pièces destinées (5, 5', 39) à fixer l'orientation relative des poutrelles, également fixables auxdites pièces de liaison coulissables et,
- d'éléments de renfort et/ou d'habillage des structures,
caractérisé en ce que pour assembler perpendiculairement les poutrelles profilées, un alésage (40) est aménagé axialement dans la pièce d'allure cylindrique (39), afin que ladite pièce d'allure cylindrique (39) soit fixable à ladite pièce de liaison (10, 11) au moyen d'une vis (43) passant dans ledit alésage axial (40).

2. Système modulaire selon l'une quelconque des revendications 1 et 2, caractérisé en ce que les poutrelles profilées (1, 1', 1") peuvent être assemblées parallèlement au moyen de deux pièces de liaison (10, 11) noyées dans des glissières en regard et fixées l'une à l'autre.

3. Système modulaire selon l'une quelconque des revendications précédentes, caractérisé en ce que les pièces de liaison (10, 11) noyées dans les glissières (3a, 3b, 3c, 3d) sont solidarisées aux accessoires de raccordement et aux pièces fixant l'orientation relative des poutrelles profilées par des vis pointeaux (6, 7, 43) s'appuyant contre le fond des glissières (3a, 3b, 3c, 3d).

4. Système modulaire selon l'une quelconque des revendications précédentes, caractérisé en ce que les pièces de liaison (11) noyées dans les glissières ont une forme de parallélogramme dont la hauteur est inférieure à la largeur de l'ouverture axiale de la glissière (3a, 3b, 3c, 3d) pratiquée dans le côté de la poutrelle (1, 1', 1"), de manière à pouvoir être introduites dans une structure déjà constituée, et dont la longueur correspond à la largeur intérieure de ladite glissière.

5. Système modulaire selon l'une quelconque des revendications précédentes, plus particulièrement appliqué à la construction d'édifices, caractérisé en ce que le jeu des accessoires de raccordement aux éléments extérieurs à la structure du type panneaux verticaux et/ou éléments de toiture, qui sont fixés aux pièces de liaison (10, 11) noyées dans les glissières des poutrelles (1, 1', 1"), comprend :
- des tôles de raccordement entre des éléments de toiture et de façade (36),
- des profilés d'assise supportant des panneaux verticaux (44),
- des profilés de support de gouttière (28),
- des profilés de fixation de la partie supérieure des panneaux verticaux (26).

6. Système modulaire selon la revendication précédente, caractérisé en ce que les profilés d'assise supportant des panneaux de façade verticaux comportent un rail (21) sur lequel le panneau vient reposer par gravitation.

7. Système modulaire selon les revendications 5 et 6, caractérisé en ce que les profilés de fixation (26) de la partie supérieure des panneaux de façade verticaux ont une section de type unciforme, dont l'extrémité (27) vient s'accrocher dans lesdits panneaux lorsqu'on les déplace dans la direction du panneau dans leurs glissières en desserrant les pièces de liaison (10, 11) noyées dans les glissières (3).

8. Système modulaire selon l'une quelconque des revendications précédentes, caractérisé en ce que les pièces destinées à fixer l'orientation mutuelle des poutrelles sont des cornières (5, 5').

9. Système modulaire selon la revendication 8, caractérisé en ce que les cornières (5') présentent une zone charnière (16) permettant de faire varier l'angle entre leurs deux ailes constitutives (17, 18).

10. Système modulaire selon l'une quelconque des revendications précédentes, caractérisé en ce que toutes les liaisons par boulonnage sont réalisées à l'aide de vis d'un seul calibre et de deux types.

11. Système modulaire selon la revendication 1, caractérisé en ce que les éléments de renfort (30) sont des tôles profilées à une seule glissière (3).

12. Système modulaire selon l'une quelconque des revendications précédentes, caractérisé en ce qu'une poutrelle (1, 1', 1") située à un angle est reliée aux extrémités des panneaux verticaux fixés à cet angle au moyen d'une pièce d'angle (22) en croix qui coopère avec les bordures des glissières (3a, 3b, 3c, 3d) sur deux côtés sécants de la poutrelle par deux de ses branches consécutives d'allure unciforme (23, 24), et avec les bordures des panneaux par les deux branches opposées.

13. Système modulaire selon la revendication 12, caractérisé en ce qu'il existe sur la pièce en croix une tige de liaison placée entre les deux branches au contact des bords des panneaux, et qui est fixée à une pièce d'angle extérieure (33) comportant deux ailes latérales (34, 35) plaquées contre les panneaux.

14. Système modulaire selon l'une quelconque des revendications précédentes, caractérisé en ce que les poutrelles (1, 1', 1") faisant office de montants d'une ossature sont reliées par des accessoires de raccordement avec les panneaux de façade et les éléments de toiture, qui sont orientés vers l'extérieur de ladite ossature.

## Patentansprüche

1. Modulares System zum schnellen Errichten von Bauwerken auf der Grundlage von Profilträgern (1, 1', 1") und Verbindungsteilen (5; 10; 11), die die Verbindung der Träger (1, 1', 1") untereinander und mit einem Satz von Zubehörteilen ermöglichen, die die Herstellung der Verbindung mit das Bauwerk vervollständigenden äußeren Elementen wie etwa vertikalen Platten und/oder Dachelementen verwirklichen, wobei das System gebildet ist aus:
- Profilträgern (1, 1', 1") mit rechtwinkligem Querschnitt, die an wenigstens einer der Seiten mit einer axialen, seitlichen Gleitschiene (3a, 3b, 3c, 3d) versehen sind und einen Mittelteil (2) aufweisen, der ein zylindrisches axiales Element umgrenzt,
- Verbindungsteilen (10, 11), die in die Gleitschienen versenkt sind und gleiten können,
- wenigstens einem Teil (39) mit zylindrischem Verlauf, um die Profilträger senkrecht zu verbinden, wobei das Teil (39) mit zylindrischem Verlauf dazu bestimmt ist, an einem der Träger (1, 1', 1") durch Befestigung mit einem in die Gleitschiene des Trägers versenkten und mit dem anderen Träger durch Verzapfung fest verbundenen Verbindungsteil (10, 11) befestigt zu werden,
- Verbindungszubehörteilen (26, 36, 44), die an den gleitfähigen Verbindungsteilen befestigt werden können, um die äußeren Elemente am Bauwerk zu befestigen,
- Teilen (5, 5', 39), die dazu vorgesehen sind, die relative Orientierung der Träger festzulegen, und ebenfalls an den gleitfähigen Verbindungsteilen befestigt werden können, und
- Elementen zum Verstärken und/oder Verkleiden der Bauwerke,
dadurch gekennzeichnet, daß für die senkrechte Verbindung der Profilträger in dem Teil (39) mit zylindrischem Verlauf eine Bohrung (40) axial ausgebildet ist, damit das Teil (39) mit zylindrischem Verlauf an dem Verbindungsteil (10, 11) mittels einer durch die axiale Bohrung (40) verlaufenden Schraube (43) befestigt werden kann.

2. Modulares System nach Anspruch 1, dadurch gekennzeichnet, daß die Profilträger (1, 1', 1") mittels zweier Verbindungsteile (10, 11), die in gegenüberliegenden Gleitschienen versenkt sind und aneinander befestigt sind, parallel verbunden werden können.

3. Modulares System nach irgendeinem der vorangehenden Ansprüche, dadurch gekennzeichnet, daß die in die Gleitschienen (3a, 3b, 3c, 3d) versenkten Verbindungsteile (10, 11) an den Verbindungszubehörteilen und an den die relative Orientierung der Profilträger festlegenden Teilen über Körnerschrauben (6, 7, 43) befestigt sind, die sich am Boden der Gleitschienen (3a, 3b, 3c, 3d) abstützen.

4. Modulares System nach irgendeinem der vorangehenden Ansprüche, dadurch gekennzeichnet, daß die in die Gleitschienen versenkten Verbindungsteile (11) die Form eines Parallelogramms besitzen, dessen Höhe kleiner als die Weite der axialen Öffnung der in der Seite des Trägers (1, 1', 1") ausgebildeten Gleitschiene (3a, 3b, 3c, 3d) ist, so daß sie in ein bereits gebildetes Bauwerk eingeführt werden können, und dessen Länge der inneren Weite der Gleitschiene entspricht.

5. Modulares System nach irgendeinem der vorangehenden Ansprüche, das insbesondere auf die Konstruktion von Gebäuden angewendet wird, dadurch gekennzeichnet, daß der Satz von Zubehörteilen für die Verbindung mit dem Bauwerk äußerlichen Elementen des Typs vertikaler Platten und/oder Dachelemente, die an den in die Gleitschienen der Träger (1, 1', 1") versenkten Verbindungsteilen (10, 11) befestigt sind, enthält:
- Verbindungsbleche zwischen den Dachelementen und der Fassade (36),
- Grundplattenprofile, die die vertikalen Platten (44) tragen,
- Dachrinnen-Tragprofile (28),
- Profile für die Befestigung des oberen Teils der vertikalen Platten (26).

6. Modulares System nach dem vorangehenden Anspruch, dadurch gekennzeichnet, daß die Grundplattenprofile, die die vertikalen Fassadenplatten tragen, eine Schiene (21) enthalten, auf der die Platte aufgrund der Schwerkraft aufruht.

7. Modulares System nach den Ansprüchen 5 und 6, dadurch gekennzeichnet, daß die Befestigungsprofile (26) des oberen Teils der vertikalen Fassadenplatten einen Querschnitt in Form eines Hakens besitzen, wovon ein Ende (27) in den Platten einhakt, wenn sie in Richtung der Platte in deren Gleitschienen verschoben werden, indem die in die Gleitschiene (3) versenkten Verbindungsteile (10, 11) gelockert werden.

8. Modulares System nach irgendeinem der vorangehenden Ansprüche, dadurch gekennzeichnet, daß die Teile, die dazu vorgesehen sind, die gegenseitige Orientierung der Träger festzulegen, Winkelstähle (5, 5') sind.

9. Modulares System nach Anspruch 8, dadurch gekennzeichnet, daß die Winkelstähle (5') eine Scharnierzone (16) aufweisen, die die Veränderung des Winkels zwischen ihren zwei konstitutiven Flügeln (17, 18) ermöglicht.

10. Modulares System nach irgendeinem der vorangehenden Ansprüche, dadurch gekennzeichnet, daß sämtliche Bolzenverbindungen mit Hilfe von Schrauben verwirklicht sind, die ein einziges Maß und zwei Bauarten besitzen.

11. Modulares System nach Anspruch 1, dadurch gekennzeichnet, daß die Verstärkungselemente (30) Profilbleche mit einer einzigen Gleitschiene (3) sind.

12. Modulares System nach irgendeinem der vorangehenden Ansprüche, dadurch gekennzeichnet, daß ein in einem Eck angeordneter Träger (1, 1', 1") mit den Enden von vertikalen Platten verbunden ist, die in diesem Eck mittels eines kreuzförmigen Winkelteils (22) befestigt sind, das mit den Rändern der Gleitschienen (3a, 3b, 3c, 3d) an zwei sich schneidenden Seiten des Trägers mittels seiner nebeneinander angeordneten Arme mit hakenförmigem Verlauf (23, 24) und mit den Rändern der Platten mittels der zwei gegenüberliegenden Arme zusammenwirkt.

13. Modulares System nach Anspruch 12, dadurch gekennzeichnet, daß am kreuzförmigen Teil ein Verbindungsstift vorhanden ist, der zwischen den mit den Kanten der Platten in Kontakt befindlichen Armen angeordnet ist und an einem äußeren Winkelteil (33) befestigt ist, das zwei an den Platten anliegende Seitenflügel (34, 35) enthält.

14. Modulares System nach irgendeinem der vorangehenden Ansprüche, dadurch gekennzeichnet, daß die Träger (1, 1', 1"), die als Stützen einer Tragkonstruktion dienen, mittels der Verbindungszubehörteile mit den Fassadenplatten und den Dachelementen, die aus der Tragkonstruktion hinausweisen, verbunden sind.

## Claims

1. A modular system for rapidly erecting structures, based on sectional beams (1, 1', 1") and link pieces (5; 10; 11) enabling said beams to be assembled with one another and having a set of accessories to provide a link with external elements completing the structure, such as vertical panels and/or roofing elements, said system consisting of:
- sectional beams (1, 1', 1") having a rectangular section with at least one axial lateral guide channel (3a, 3b, 3c, 3d) on at least one of the sides and having a central portion designed to enclose a cylindrical axial element,
- link pieces (10, 11) countersunk in said guide channels and slidable,
- at least one piece, cylindrical in contour (39), for assembling the sectional beams perpendicularly, said piece of cylindrical contour (39) intended to be fixed to one of the beams (1, 1', 1") by being joined to a link piece (10, 11) countersunk in the guide channel of said beam and fixed to the other beam by pinning,
- jointing accessories (26, 36, 44) which can be fixed to the slidable link parts in order to provide a connection with elements external to the structure,
- parts (5, 5', 39) designed to set the relative orientation of the beams, which can also be fixed to the said slidable link pieces and
- elements for reinforcing and/or lining the structures,
characterised in that for the purposes of assembling the sectional beams perpendicularly, a bore (40) is arranged axially in the part having a cylindrical contour (39) so that said part of cylindrical contour (39) can be secured to said link part (10, 11) by means of a screw (43)inserted in said axial bore (40).

2. A modular system as claimed in any one of claims 1 and 2, characterised in that the sectional beams (1, 1', 1") may be assembled in parallel by means of two link pieces (10, 11) countersunk in facing guide channels and secured one to the other.

3. A modular system as claimed in any one of the preceding claims, characterised in that the link pieces (10, 11) countersunk in the guide channels (3a, 3b, 3c, 3d) are joined to the jointing accessories and to the pieces setting the relative orientation of the sectional beams by means of centre screws (6, 7, 43) supported on the base of the guide channels (3a, 3b, 3c, 3d).

4. A modular system as claimed in any one of the preceding claims, characterised in that the link parts (11) countersunk in the guide channels have the shape of a parallelogram, the height of which is smaller than the width of the axial opening of the guide channel (3a, 3b, 3c, 3d) arranged in the side of the beam (1, 1', 1") to allow insertion in a structure that has already been erected and the length of which matches the inside width of said guide channel.

5. A modular system as claimed in any one of the preceding claims, more specifically applied to the construction of buildings, characterised in that the set of accessories providing a link to the elements external to the structure such as vertical panels and/or roofing elements, which are secured to the link pieces (10, 11) countersunk in the guide channels of the beams (1, 1', 1") consist of:
- plates providing a link between roofing and facade elements (36),
- bedding sections supporting vertical panels (44),
- supporting sections for guttering (28),
- sections for securing the upper part of the vertical panels (26).

6. A modular system as claimed in the preceding claim, characterised in that the bedding sections supporting vertical facade panels have a rail (21) on which the panel is brought into a rest position by gravitation.

7. A modular system as claimed in claims 5 and 6, characterised in that the sections (26) used to fix the upper part of vertical facade panels have a hook-shaped section, the end (27) of which is fitted so as to hook into the said panels as they are displaced in the direction of the panel in their guide channels and release the link pieces (10, 11) countersunk in the guide channels (3).

8. A modular system as claimed in any one of the preceding claims, characterised in that the parts designed to set the mutual orientation of the beams are angle sections (5, 5').

9. A modular system as claimed in claim 8, characterised in that the angle sections (5') have a hinge area (16) which allows the angle between the two wings (17, 18) of which they are comprised to be varied.

10. A modular system as claimed in any one of the preceding claims, characterised in that all the bolted links are provided by screws of single size and of two types.

11. A modular system as claimed in claim 1, characterised in that the reinforcing elements (30) are section plates with a single guide channel (3).

12. A modular system as claimed in any one of the preceding claims, characterised in that a beam (1, 1', 1") placed at an angle is linked to the ends of vertical panels secured at this angle by means of a cross-shaped corner piece (22) co-operating with the edges of the guide channels (3a, 3b, 3c, 3d) on two secant sides of the beam by means of two of its consecutive hook-shaped branches (23, 24) and with the edges of the panels with the two opposing branches.

13. A modular system as claimed in claim 12, characterised in that on the cross-shaped piece located between the two branches in contact with the edges of the panels is a linking pin which is fixed to an external corner piece (33) having two lateral wings (34, 35) placed against the panels.

14. A modular system as claimed in any one of the preceding claims, characterised in that the beams (1, 1', 1") acting as upright posts for a framework are linked by means of jointing accessories to the facade panels and roofing elements, which are oriented towards the exterior of the said frameworks.
